# EUROPÄISCHE PATENTSCHRIFT

(11) **EP 2 598 388 B1**
(45) Veröffentlichungstag und Bekanntmachung des Hinweises auf die Patenterteilung: **14.05.2014**
(21) Anmeldenummer: 11722431.1
(22) Anmeldetag: 30.05.2011
(51) Int. Cl.: B60T 8/40, B60T 8/88, B60T 8/92, B60T 13/14, B60T 13/66, B60T 17/02, B60T 17/22, F15B 21/00

(54) **STEUERVORRICHTUNG FÜR EINE SPEICHERLADEPUMPE EINES BREMSSYSTEMS EINES FAHRZEUGS UND VERFAHREN ZUM BETREIBEN EINER SPEICHERLADEPUMPE EINES BREMSSYSTEMS EINES FAHRZEUGS**
CONTROL DEVICE FOR A STORAGE TANK CHARGE PUMP OF A BRAKE SYSTEM OF A VEHICLE AND METHOD FOR OPERATING A STORAGE TANK CHARGE PUMP OF A BRAKE SYSTEM OF A VEHICLE
DISPOSITIF DE COMMANDE POUR UNE POMPE DE CHARGE D'ACCUMULATEUR D'UN SYSTÈME DE FREINAGE D'UN VÉHICULE, ET PROCÉDÉ POUR LE FONCTIONNEMENT D'UNE POMPE DE CHARGE D'ACCUMULATEUR D'UN SYSTÈME DE FREINAGE D'UN VÉHICULE

(30) Priorität: 30.07.2010 DE 102010038704
(43) Veröffentlichungstag der Anmeldung: 05.06.2013
(73) Patentinhaber: Robert Bosch GmbH, 70442 Stuttgart (DE)
(72) Erfinder: HACHTEL, Juergen, 74219 Moeckmuehl (DE)
(86) Internationale Anmeldenummer: PCT/EP2011/058826
(87) Internationale Veröffentlichungsnummer: WO 2012/013390

(56) Entgegenhaltungen:
- EP-A2- 0 175 843
- WO-A1-2011/046136
- US-A- 5 547 265
- US-A- 5 791 745

## Beschreibung

Die Erfindung betrifft eine Steuervorrichtung für eine Speicherladepumpe eines Bremssystems eines Fahrzeugs. Des Weiteren betrifft die Erfindung ein Verfahren zum Betreiben einer Speicherladepumpe eines Bremssystems eines Fahrzeugs.

### Stand der Technik

Die DE 199 35 371 A1 beschreibt ein Verfahren und eine Vorrichtung zur Ansteuerung von Komponenten in einem Fahrzeug, insbesondere zur Ansteuerung einer Pumpe zum Aufladen eines Druckspeichers. Dabei wird vorgeschlagen, ein Pulspausenverhältnis des getaktet angesteuerten Pumpenmotors in Abhängigkeit von den Fahrzeug- und/oder Umgebungsgeräuschen, bzw. von wenigstens einer Geräusch-beeinflussenden Größe, vorzugeben.

In der DE 102 15 392 A1 ist ein Verfahren zur Ansteuerung einer Speicherladepumpe einer elektrohydraulischen Bremsanlage beschrieben. Bei dem Verfahren wird die Speicherladepumpe zum Befüllen eines Druckspeichers der elektrohydraulischen Bremsanlage aktiviert, sofern ein Druck in dem Druckspeicher einen vorgebbaren Einschaltschwellenwert unterschreitet. Der Einschaltschwellenwert wird während des Fahrbetriebs unter Berücksichtigung von mindestens einer aktuellen Zustands- oder Betriebsgröße des Fahrzeugs, wie beispielsweise einer Temperatur und/oder einer aktuell geleisteten Reibarbeit, variabel eingestellt.

Dokument US 5 791 745 A offenbart eine Steuervorrichtung gemäß dem Oberbegriff des Anspruchs 1.

### Offenbarung der Erfindung

Die Erfindung schafft eine Steuervorrichtung für eine Speicherladepumpe eines Bremssystems eines Fahrzeugs mit den Merkmalen des Anspruchs 1 und ein Verfahren zum Betreiben einer Speicherladepumpe eines Bremssystems eines Fahrzeugs mit den Merkmalen des Anspruchs 9.

### Vorteile der Erfindung

Die erfindungsgemäße Steuervorrichtung und das entsprechende Verfahren ermöglichen bei einem Abweichen der an die Speicherladepumpe bereitgestellten Versorgungsspannung von einem Normalwertebereich, insbesondere bei Auftreten eines Spannungsabfalls im fahrzeugeigenen Bordnetz, ein Reduzieren der durch einen Motor der Speicherladepumpe fließenden Ströme derart, dass die für das Bereitstellen der Versorgungsspannung verwendete Fahrzeugkomponente, wie beispielsweise das Bordnetz, geschont wird. Auf diese Weise kann insbesondere verhindert werden, dass im Falle eines Spannungsabfalls im Bordnetz ein Strom mit einer vergleichsweise großen Stromstärke durch die Speicherladepumpe fließt, und somit das Bordnetz unnötig belastet wird. Damit ist ein verlässliches Aufrechterhalten des Fahrzeugbetriebs gewährleistet. Auf die dabei realisierbaren Möglichkeiten zum Reduzieren der Ströme durch die Speicherladepumpe mittels der gewährleisteten vorteilhaften Ansteuerung des Betriebsmodus der Speicherladepumpe wird unten genauer eingegangen.

Des Weiteren kann mittels der Steuervorrichtung und dem entsprechenden Verfahren gewährleistet werden, dass eine Ansteuerelektronik nicht aufgrund eines zu hohen Stromflusses durch einen Motor der Speicherladepumpe beschädigt wird. Dies ist ein weiterer Vorteil zusätzlich zu der unterbundenen unnötigen Belastung des Bordnetzes aufgrund eines zu hohen Stromflusses durch den Motor der Speicherladepumpe.

Man kann die mittels der erfindungsgemäßen Steuervorrichtung und dem korrespondierenden Verfahren aufgeführten Funktionen auch so umschreiben, dass im Falle eines Abweichens der Bordspannung von dem Normalwertebereich, insbesondere im Falle von einer Unterspannung im Bordnetz, über eine vorteilhafte Ansteuerung des Speicherlademotors Schäden an der Ansteuerelektronik und/oder eine zusätzliche Belastung des Bordnetzes verhindert werden.

In einer vorteilhaften Ausführungsform ist die Ansteuereinrichtung zusätzlich dazu ausgelegt, zu ermitteln, ob die empfangene Größe in einem vorgegebenen ersten Abweichungs-Wertebereich liegt, und, gegebenenfalls, die Speicherladepumpe in einen ersten Abweichungsmodus mit einer ersten Solldrehzahl größer als der Normaldrehzahl zu steuern. Insbesondere kann die erste Solldrehzahl um einen Faktor von mindestens 2, vorteilhafter Weise 2,5, insbesondere 3, größer als die Normaldrehzahl sein. Durch die Steigerung der Solldrehzahl werden die Stromstärken der durch einen Motor der Speicherladepumpe und eine Ansteuerungselektronik fließenden Ströme reduziert. Auf diese Weise wird auch eine Verlustleistung des Motors und/oder der Ansteuerelektronik reduziert. Dies reduziert die Belastung der fahrzeugeigenen Stromversorgungskomponente, wie beispielsweise die Belastung des fahrzeugeigenen Bordnetzes.

Als Alternative oder als Ergänzung dazu kann die Ansteuereinrichtung zusätzlich dazu ausgelegt sein, zu ermitteln, ob die empfangene Größe in einem vorgegebenen zweiten Abweichungs-Wertebereich liegt, und, gegebenenfalls, die Speicherladepumpe in einen zweiten Abweichungsmodus mit einer zweiten Solldrehzahl gleich Null zu steuern. Auf diese Weise kann, insbesondere bei einem signifikanten Spannungsabfall im fahrzeugeigenen Bordnetz, die Speicherladepumpe des Bremssystems automatisch in einen Stillstand überführt werden. Somit kann die dem Bordnetz noch entnehmbare Energie für Fahrzeugfunktionen mit höchster Priorität genutzt werden. Dies ist vor allem vorteilhaft, sofern die Speicherladepumpe zum Aufladen eines Druckspeichers genutzt wird, mittels welchem die von dem Fahrer über die auf das Bremsbetätigungselement aufgebrachte Bremswirkung verstärkbar ist. In diesem Fall muss der Fahrer nach einem Überführen der Speicherladepumpe in den Stillstand zwar eine größere Kraft auf das Bremsbetätigungselement, wie beispielsweise ein Bremspedal, aufbringen, jedoch kann der Fahrer das Fahrzeug sicher abbremsen.

In einer vorteilhaften Weiterbildung ist die Ansteuereinrichtung zusätzlich dazu ausgelegt, zu ermitteln, ob die empfangene Größe zwischen dem ersten Abweichungs-Wertebereich und dem zweiten Abweichungs-Wertebereich liegt, und, gegebenenfalls, die Speicherladepumpe in einen dritten Abweichungsmodus mit einer dritten Solldrehzahl größer als der Normaldrehzahl zu steuern, in welchem ein Anlauf der Speicherladepumpe mittels der Ansteuereinrichtung unterbindbar ist. Durch das Vorgeben einer Solldrehzahl größer als der Normaldrehzahl können die durch den Motor der Speicherladepumpe und/oder die Ansteuerungselektronik fließenden Ströme reduziert werden. Zusätzlich kann durch das Unterbinden/Verhindern eines Anlaufs des Motors der Speicherladepumpe verhindert werden, dass die vergleichsweise hohen Speicherlademotoranlaufströme das Bordnetz zusätzlich belasten und somit die Bordspannung weiter absinkt. Trotz eines Aufrechterhaltens eines Grundbetriebs der Speicherladepumpe ist somit eine unnötige Bordnetzbelastung verhinderbar.

Die in den oberen Absätzen beschriebenen Vorteile sind auch bei einer Ausbildung der Steuervorrichtung als Untereinheit der Speicherladepumpe realisiert.

Ebenso sind die in den oberen Absätzen genannten Vorteile auch bei einem Bremssystem mit einer derartigen Steuervorrichtung, einer Speicherladepumpe und einem Druckspeicher, in welchem mittels der Speicherladepumpe ein Druck aufbaubar ist, gewährleistet.

Bevorzugter Weise kann der Druckspeicher mit einem Hauptbremszylinder des Bremssystems hydraulisch so verbunden sein, dass ein Innendruck in mindestens einer Druckkammer des Hauptbremszylinders mittels des in dem Druckspeicher aufgebauten Drucks steigerbar ist. Beispielsweise kann dazu der Druckspeicher mit einer Vorkammer des Hauptbremszylinders hydraulisch verbunden sein. In diesem Fall dient der Druckspeicher insbesondere dazu, einen Bedienkomfort des Bremsbetätigungselements für den Fahrer, welcher beim Abbremsen des Fahrzeugs arbeitsmäßig entlastet wird, zu verbessern. Da jedoch bei einer Abweichung der Bordspannung von einem Normalwertebereich auf diesen Bedienkomfort verzichtet werden kann, gewährleistet diese Ausführungsform einen guten Sicherheitsstandard des damit ausgestatteten Fahrzeugs.

Des Weiteren werden die in den oberen Absätzen beschriebenen Vorteile auch von einem entsprechenden Verfahren zum Betreiben einer Speicherladepumpe eines Bremssystems eines Fahrzeugs gewährleistet.

### Kurze Beschreibung der Zeichnungen

Weitere Merkmale und Vorteile der vorliegenden Erfindung werden nachfolgend anhand der Figuren erläutert. Es zeigen:
- Fig. 1: ein Koordinatensystem zum Erläutern einer Ausführungsform des Verfahrens zum Betreiben einer Speicherladepumpe eines Bremssystems eines Fahrzeugs; und
- Fig. 2: eine schematische Darstellung eines Bremssystems mit der Steuervorrichtung für eine Speicherladepumpe.

### Ausführungsformen der Erfindung

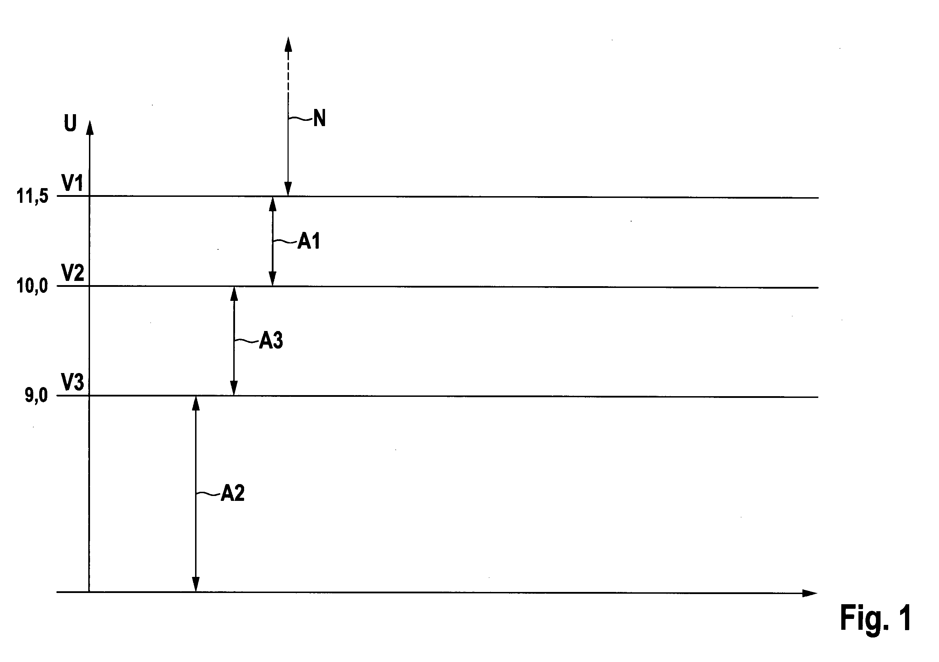

Fig. 1 zeigt ein Koordinatensystem zum Erläutern einer Ausführungsform des Verfahrens zum Betreiben einer Speicherladepumpe eines Bremssystems eines Fahrzeugs. Die Ordinate des Koordinatensystems gibt einen Gesamt-Wertebereich einer Bordspannung U eines fahrzeugeigenen Bordnetzes wieder. Es wird jedoch darauf hingewiesen, dass die Anwendbarkeit des hier beschriebenen Verfahrens nicht ein Bereitstellen der Versorgungsspannung als Bordspannung U an die betreibbare Speicherladepumpe voraussetzt. Der Abszisse des dargestellten Koordinatensystems ist kein physikalischer Wert zugeordnet.

Bei dem im Weiteren beschriebenen Verfahren wird eine Größe bezüglich einer an die betriebene Speicherladepumpe bereitgestellten Versorgungsspannung ermittelt. Die ermittelte Größe kann beispielsweise ein Spannungswert, insbesondere die Bordspannung U, sein. Das hier beschriebene Verfahren ist jedoch nicht auf ein Ermitteln eines Spannungswerts als der Größe bezüglich der Versorgungsspannung beschränkt.

Anschließend wird ermittelt, ob die ermittelte Größe in einem für einen Normalmodus der Speicherladepumpe vorgegebenen Normalwertebereich N liegt. Der Normalwertebereich N kann beispielsweise ein erster Spannungsbereich sein. In einer vorteilhaften Ausführungsform wird beim Ermitteln, ob die ermittelte Größe in dem Normalwertebereich N liegt, die ermittelte Größe mit mindestens einem ersten Vergleichswert V1 verglichen. Der mindestens eine erste Vergleichswert V1 kann beispielsweise ein erster Spannungswert, insbesondere eine Spannung von 11,5 V, sein. Der in diesem Absatz wiedergegebene Verfahrensschritt ist jedoch nicht auf ein derartiges Ermitteln des Umfassens der ermittelten Größe durch den Normalwertebereich N beschränkt.

Sofern die ermittelte Größe in dem Normalwertebereich N liegt, wird die Speicherladepumpe in dem Normalmodus mit der dafür vorgegebenen Normaldrehzahl betrieben. Bevorzugter Weise erfolgt während eines Zeitintervalls, in welchem die ermittelte Größe in dem Normalwertebereich N liegt, keine Veränderung an einer Speicherladeregelung im Normalmodus. Ein Motor der Speicherladepumpe (Speicherlademotor) wird somit im Normalmodus mit einer für diesen fest vorgegebenen Drehzahl, z.B. 1000 Drehungen/min, betrieben.

Sofern die ermittelte Größe außerhalb des Normalwertebereichs N liegt, wird die Speicherladepumpe aus dem Normalmodus in mindestens einem Abweichungsmodus mit mindestens einer von der Normaldrehzahl abweichenden Solldrehzahl gesteuert. Die nachfolgend beschriebenen Möglichkeiten zum Steuern der Speicherladepumpe in die beschriebenen Abweichungsmoden sind lediglich beispielhaft zu verstehen.

Beispielsweise kann bei dem Verfahren auch ermittelt werden, ob die ermittelte Größe in einem vorgegebenen ersten Abweichungs-Wertebereich A1, insbesondere einem zweiten Spannungsbereich, liegt. Insbesondere kann eine unter dem ersten Vergleichswert V1 liegende Größe mit einem zweiten Vergleichswert V2, wie beispielsweise einer Spannung von 10,0 V, verglichen werden. Sofern die ermittelte Größe in dem ersten Abweichungs-Wertebereich A1 liegt, kann die Speicherladepumpe in einen ersten Abweichungsmodus mit einer ersten Solldrehzahl größer als der Normaldrehzahl gesteuert werden. Dies ist insbesondere vorteilhaft, sofern der erste Abweichungs-Bereich A1 benachbart zu dem Normalwertebereich N liegt und einer Versorgungsspannung unter einer Normal-Versorgungsspannung entspricht. Mittels des hier beschriebenen Verfahrensschritts ist somit insbesondere bei einem Spannungsabfall im Bordnetz eine Verlustleistung des Motors und/oder der Ansteuerelektronik reduzierbar. Auf diese Weise kann die Bordnetzbelastung reduziert werden. Gleichzeitig ist gewährleistet, dass die in den ersten Abweichungsmodus gesteuerte Speicherladepumpe weiterhin für ein Aufladen des ihr zugeordneten Druckspeichers verwendbar ist. Somit kann trotz der reduzierten Bordnetzbelastung weiterhin ein Druck in dem Druckspeicher, auf dessen Funktion unten genauer eingegangen wird, mittels der in dem ersten Abweichungsmodus gesteuerten Speicherladepumpe aufgebaut werden.

Die erste Solldrehzahl kann um einen Faktor von mindestens 2, insbesondere um einen Faktor von mindestens 2,5, vorzugsweise um einen Faktor von mindestens 3, größer als die Normaldrehzahl sein. Insbesondere kann in dem ersten Abweichungsmodus die erste Solldrehzahl auf die maximal mögliche Solldrehzahl des Motors der Speicherladepumpe, wie beispielsweise auf eine Solldrehzahl von 3000 Drehungen/min, gestellt werden. Dies führt dazu, dass die durch den Motor und eine Ansteuerungselektronik der Speicherladepumpe fließenden Ströme, welche vorzugsweise getaktet sind, minimal werden. Auf diese Weise ist der oben genannte Vorteil verlässlich gewährleistet.

Ebenso kann in einem anderen Verfahrensschritt ermittelt werden, ob die ermittelte Größe in einem vorgegebenen zweiten Abweichungs-Wertebereich A2, beispielsweise unter einem dritten Vergleichswert V3, insbesondere unter einem Spannungswert von 9,0 V, liegt. Sofern die ermittelte Größe in dem zweiten Abweichungs-Wertebereich A2 liegt, wird die Speicherladepumpe in einen zweiten Abweichungsmodus mit einer zweiten Solldrehzahl gleich Null gesteuert. Man kann den zweiten Abweichungsmodus auch so umschreiben, dass ein bereits laufender Motor der Speicherladepumpe gestoppt und ein Anlauf des Motors der in dem zweiten Abweichungs-Wertebereich gesteuerten Speicherladepumpe unterbunden/verhindert wird. Dieses Steuern der Speicherladepumpe in den zweiten Abweichungsmodus ist insbesondere vorteilhaft, sofern ein signifikanter Spannungsabfall der an die Speicherladepumpe bereitgestellten Versorgungsspannung auftritt. Somit ist in einer derartigen Situation gewährleistet, dass keine Belastung des Bordnetzes aufgrund des Betreibens/Anlaufens des Motors der Speicherladepumpe erfolgt.

Des Weiteren kann ermittelt werden, ob die ermittelte Größe in einem dritten Abweichungs-Wertebereich A3 zwischen dem ersten Abweichungs-Wertebereich A1 und dem zweiten Abweichungs-Wertebereich A2 liegt. Der dritte Abweichungs-Wertebereich kann insbesondere ein dritter Spannungsbereich zwischen den Vergleichswerten V2 und V3 sein. Sofern die ermittelte Größe in dem dritten Abweichungs-Wertebereich A3 liegt, wird bei der hier beschriebenen Ausführungsform des Verfahrens die Speicherladepumpe in einen dritten Abweichungsmodus mit einer dritten Solldrehzahl größer als der Normaldrehzahl gesteuert, wobei in dem dritten Abweichungsmodus zusätzlich ein Anlauf der Speicherladepumpe unterbunden/verhindert wird.

Bevorzugter Weise wird die dritte Solldrehzahl entsprechend der ersten Solldrehzahl vorgegeben. Beispielsweise kann die dritte Solldrehzahl um einen Faktor von mindestens 2, insbesondere um einen Faktor von mindestens 2,5, vorzugsweise um einen Faktor von mindestens 3, größer als die Normaldrehzahl sein und/oder einer maximal möglichen Solldrehzahl des Motors der Speicherladepumpe, wie beispielsweise einer Solldrehzahl von 3000 Drehungen/min, entsprechen. Auf diese Weise sind die durch das Betreiben der Speicherladepumpe in dem ersten Abweichungsmodus realisierbaren Vorteile auch in dem dritten Abweichungsmodus gewährleistet.

Zusätzlich kann in dem dritten Abweichungsmodus durch das UnterbindenNerhindern eines Anlaufs des Motors der Speicherladepumpe verhindert werden, dass die hohen Speicherlademotoranlaufströme das Bordnetz zusätzlich belasten. Damit ist ein zusätzliches Absinken der Bordspannung aufgrund von entnommenen Speicherlademotoranlaufströmen verlässlich verhinderbar. Dies ist sehr vorteilhaft, da derartige Speicherlademotoranlaufströme in der Regel deutlich über den Strömen eines stationären Betriebs des Motors der Speicherladepumpe liegen. Beispielsweise können, obwohl die Ströme des stationären Betriebs der Speicherladepumpe in einem Bereich zwischen 20-30 A liegen, Speicherlademotoranlaufströme von etwa 100 A auftreten.

Das in den oberen Absätzen beschriebene Verfahren gewährleistet ein Aufrechterhalten eines Fahrzeugbetriebs trotz eines Abfalls der Bordspannung. Die genannten Zahlen sind lediglich beispielhaft zu verstehen und können an das Bordnetz eines Fahrzeugs individuell angepasst werden. Somit ist das Verfahren für verschiedene Bordnetztypen verwendbar.

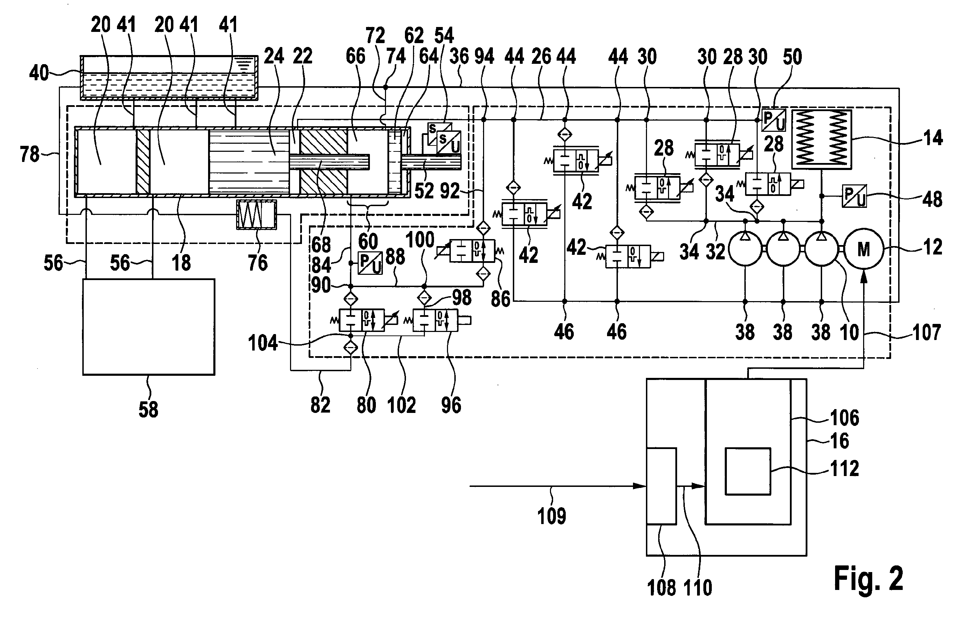

Fig. 2 zeigt eine schematische Darstellung eines Bremssystems mit der Steuervorrichtung für eine Speicherladepumpe.

Das schematisch wiedergegebene Bremssystem weist eine Speicherladepumpe 10 mit einem Motor 12 auf, mittels welcher ein Druck in einem Druckspeicher 14 aufbaubar ist. Man kann dies auch so umschreiben, dass der Druckspeicher 14 mittels der Speicherladepumpe 10 beladbar ist. Der Druckspeicher 14 kann insbesondere als Hochdruckspeicher ausgebildet sein. Die unten genauer beschriebene Steuervorrichtung 16 für die Speicherladepumpe 10 ist jedoch nicht auf das Beladen eines derartigen Drucksensors 14 beschränkt. Ebenso ist die Ausbildung der Speicherladepumpe 10 als Drei-Kolben-Pumpe lediglich beispielhaft zu verstehen.

Bei dem Bremssystem ist der Druckspeicher 14 mit einem Hauptbremszylinder 18 des Bremssystems hydraulisch so verbunden, dass ein Innendruck in mindestens einer Druckkammer 20 des Hauptbremszylinders 18 mittels des in dem Druckspeicher 14 aufgebauten Druck steigerbar ist. Der Hauptbremszylinder 18 kann als Tandem-Hauptbremszylinder ausgebildet sein. Das im Weiteren beschriebene Bremssystem ist jedoch nicht auf einen derartigen Hauptbremszylinder 18 beschränkt.

Bevorzugter Weise ist der Druckspeicher 14 mit einer Vorkammer 22 des Hauptbremszylinders 18 hydraulisch verbunden. Unter der Vorkammer 22 kann ein Innenvolumen des Hauptbremszylinders 18 verstanden werden, wobei eine verstellbare Komponente 24 des Hauptbremszylinders 18 die Vorkammer 22 so von der mindestens einen Druckkammer 20 abgrenzt, dass ein Gesamtvolumen aus der Vorkammer 22 und der mindestens einen Druckkammer 20 auch bei einem Verstellen der verstellbaren Komponente 24 konstant bleibt. Somit bewirkt eine Volumenzunahme der Vorkammer 22 ein Zusammendrücken der mindestens einen Druckkammer 20 und auf diese Weise eine korrespondierende Steigerung des Innendrucks in der mindestens einen Druckkammer 20. Entsprechend kann eine Volumenzunahme der Vorkammer 22 eine Volumenzunahme der mindestens einen Druckkammer 20, und damit eine Reduzierung des Innendrucks in der mindestens einen Druckkammer 20, bewirken.

Bei der hier beschriebenen Ausführungsform fungiert der Druckspeicher 14 somit als Bremskraftverstärker des Bremssystems. Man kann dies auch so umschreiben, dass bei dem Bremssystem ein herkömmlicher Bremskraftverstärker durch eine Hydraulikeinrichtung, welche die Speicherladepumpe 10 und den Druckspeicher 14 umfasst, ersetzt wird. Wie unten genauer beschrieben wird, kann das dargestellte Bremssystem mit der Hydraulikeinrichtung in einem Hybrid- oder Elektrofahrzeug eingesetzt werden. Das wiedergegebene Bremssystem ist deshalb als HAS-hev (Hydraulic Actuation System for hybride electrical vehicles) bezeichenbar.

Die Speicherladepumpe 10 und der Druckspeicher 14 sind über eine Leitung 26 mit der Vorkammer 22 hydraulisch verbunden. Dabei ist mindestens ein Druckaufbauventil 28 in der hydraulischen Verbindung zwischen dem Druckspeicher 14 und der Vorkammer 22 so angeordnet, dass ein Bremsmediumvolumen aus dem Druckspeicher 14 durch das mindestens eine geöffnete Druckaufbauventil 28 in die Vorkammer 22 verschiebbar ist. Insbesondere können mehrere Druckaufbauventile 28 über in der Leitung 26 ausgebildete Verzweigungspunkte 30 und über in einer weiteren Leitung 32 ausgebildete Verzweigungspunkte 34 mit einer Förderseite der Speicherladepumpe 10 und dem Drucksensor 14 verbunden sein. Bei einer Ausbildung der Speicherladepumpe 10 als Drei-Kolben-Pumpe ist eine Verwendung von drei Druckaufbauventilen 28 vorteilhaft. Das im Weiteren beschriebene Bremssystem ist jedoch nicht auf eine bestimmte Anzahl von Druckaufbauventilen 28 beschränkt.

Eine Ansaugseite der Speicherladepumpe 10 ist über mindestens einen in einer Reservoirleitung 36 ausgebildeten Verzweigungspunkt 38 mit einem Bremsmediumreservoir 40 verbunden. Das Bremsmediumreservoir 40 kann über mindestens eine Durchströmöffnung 41 mit der mindestens einen Druckkammer 20 des Hauptbremszylinders 18 verbunden sein.

Bevorzugter Weise ist die Ansaugseite der Speicherladepumpe 10 auch mit der Vorkammer 22 über mindestens ein Druckabbauventil 42 verbunden. In diesem Fall kann nach einem Öffnen des mindestens einen Druckabbauventils 42 ein Bremsmediumvolumen aus der Vorkammer 22 durch das mindestens eine geöffnete Druckabbauventil 42 mittels der Speicherladepumpe 10 in den Druckspeicher 14 gepumpt werden. Dies bewirkt eine schnelle Volumenabnahme der Vorkammer 22, und damit eine schnelle Druckreduzierung in der mindestens einen Druckkammer 20 des Hauptbremszylinders 18. Beispielsweise können mehrere Druckabbauventile 42, insbesondere drei Druckabbauventile 42, eingangsseitig mit je einem in der Leitung 26 ausgebildeten Verzweigungspunkt 44 und ausgangsseitig mit einem in der Reservoirleitung 36 ausgebildeten Verzweigungspunkt 46 verbunden sein.

Der aus der Speicherladepumpe 10 und dem Druckspeicher 14 gebildete Bremskraftverstärker kann unter Verwendung von mindestens einem Sensor 48 oder 50 gesteuert werden. Beispielsweise kann ein erster Sensor 48 an der Förderseite der Speicherladepumpe 10 und dem Drucksensor 40 angeordnet sein. Ein zweiter Sensor 50, welcher auch als Drucksensor ausgebildet sein kann, ist in diesem Fall bevorzugter Weise an die Leitung 26 angeschlossen.

Über ein Öffnen und Schließen der Ventile 28 und 42, vorzugsweise unter Berücksichtigung der bereitgestellten Sensorsignale des mindestens einen Sensors 48 oder 50, kann das Volumen der Vorkammer 22 so eingestellt werden, dass in der mindestens einen Druckkammer 20 ein einer von einem automatischen Geschwindigkeitssteuersystem (ACC) und/oder einer Notbremsautomatik vorgegebenen Soll-Fahrzeugverzögerung entsprechender Innendruck aktiv eingestellt wird. Somit können die Speicherladepumpe 10 und der Druckspeicher 14 in einem mit einem mit einem automatischen Geschwindigkeitssteuersystem und/oder einer Notbremsautomatik ausgestatteten Bremssystem eingesetzt werden.

Ebenso kann ein Fahrer bei einer Betätigung eines Bremsbetätigungselements 52 zum Reduzieren einer Fahrzeuggeschwindigkeit von der Speicherladepumpe 10 und dem Druckspeicher 14 unterstütz werden. Beispielsweise kann mittels mindestens eines Betätigungssensors 54, wie beispielsweise mittels eines Bremskraftsensors und/oder eines Bremswegsensors, eine von dem Fahrer vorgegebene Soll-Verzögerung der Fahrzeuggeschwindigkeit festgestellt werden. Anschließend kann mittels der Speicherladepumpe 10, dem Druckspeicher 14 und den Ventilen 28 und 42 das Volumen der Vorkammer 22 aktiv so eingestellt werden, dass in mindestens einem mit der mindestens einen Druckkammer 20 über eine Zufuhrleitung 56 hydraulisch verbundenen (hier nur schematisch wiedergegebenen) Bremskreis 58, bzw. in mindestens einem (nicht skizzierten) Radbremszylinder des mindestens einen Bremskreises 48, ein gewünschter Bremsdruck vorliegt. Es wird darauf hingewiesen, dass das hier wiedergegebene Bremssystem nicht auf eine bestimmte Ausbildung des mindestens einen Bremskreises 58 limitiert ist. Auf genauere Ausführungen zu dem mindestens einen Bremskreis 58 wird deshalb verzichtet.

Die Speicherladepumpe 10, der Drucksensor 14 und die Ventile 28 und 42 gewährleisten somit einen verbesserten Bremskomfort für den Benutzer des Bremssystems. Insbesondere kann bei einer vorteilhaften Funktionsweise der Speicherladepumpe 10, des Druckspeichers 14 und der Ventile 28 und 42 ein Vielfaches von einer auf das Bremsbetätigungselement 52 ausgeübten Fahrerbremskraft auf die verstellbare Komponente 24 aufgebracht werden. Der Fahrer muss somit nicht selbst die gesamte zum Aufbauen des gewünschten Bremsdrucks aufzubringende Kraft auf das Bremsbetätigungselement 52 ausüben.

Das dargestellte Bremssystem kann auch zusammen mit einem (nicht skizzierten) Generator zum Abbremsen eines Fahrzeugs verwendet werden. Mittels der Speicherladepumpe 10, dem Druckspeicher 14 und den Ventilen 28 und 42 kann in diesem Fall der in dem mindestens einen Bremskreis 58 vorliegende Bremsdruck unter Berücksichtigung einer Zu- oder Abnahme des Generator-Bremsmoments variiert werden. Beispielsweise kann mittels eines Herauspumpens eines Bremsmediumvolumens aus der Vorkammer 22 über das mindestens eine geöffnete Druckabbauventil 42 der Bremsdruck in dem mindestens einen Bremskreis 58 entsprechend der zeitlichen Zunahme des Generator-Bremsmoments reduziert werden. Ebenso kann durch ein Transferieren eines Bremsmediumvolumens aus dem Druckspeicher 14 über das mindestens eine Druckaufbauventil 28 in die Vorkammer 22 der Bremsdruck in dem mindestens einen Bremskreis 58 so gesteigert werden, dass eine zeitliche Abnahme des Generator-Bremsmoments kompensiert wird. Mittels der Speicherladepumpe 10, dem Druckspeicher 14 und den Ventilen 28 und 42 ist somit ein vorteilhaftes Verblenden des Generator-Bremsmoments ausführbar.

Um einen zusätzlichen Bedienkomfort für den Benutzer des Bremssystems zu gewährleisten, kann zwischen dem Bremsbetätigungselement 52 und dem Hauptbremszylinder 18 ein Sensierungszylinder 60 ausgebildet sein. Beispielsweise kann (das hier nur schematisch wiedergegebene) Bremsbetätigungselement 52 mit einer verstellbaren Komponente 62 des Sensierungszylinders 60, welche ein Gesamtinnenvolumen des Sensierungszylinders 60 in eine Vorkammer 64 und eine Druckkammer 66 unterteilt, verbunden sein. In diesem Fall kann die verstellbare Komponente 24 des Hauptbremszylinders 18 mit einem Kolben 68 verbunden sein, welcher zumindest teilweise in die Druckkammer 66 des Sensierungszylinders 60 hineinragt. Bevorzugter Weise ist der Druck in der Druckkammer über eine Druckeinstelleinrichtung, welche nachfolgend genauer beschrieben wird, variierbar.

Durch eine Verwendung eines derartigen Sensierungszylinders 60 zusammen mit einer Druckeinstelleinrichtung kann eine von dem Innendruck in der mindestens einen Druckkammer 20 des Hauptbremszylinders 18 entkoppelbare Rückstellwirkung auf das Bremsbetätigungselement 52 ausgeübt werden. Der Fahrer spürt in diesem Fall trotz eines Variierens des Bremsdrucks in dem mindestens einen Bremskreis 58 zum Verblenden des Generator-Bremsmoments ein standardgemäßes Bremsgefühl (Pedalgefühl). Gleichzeitig hat der Fahrer die Möglichkeit, über den Sensierungszylinder 60 aktiv in den Hauptbremszylinder 18 hineinzubremsen.

Die Druckkammer 66 des Sensierungszylinders 60 kann über eine Leitung 72 mit einem in der Reservoirleitung 36 ausgebildeten Verzweigungspunkt 74 hydraulisch verbunden sein. Bevorzugter Weise ist die hydraulische Verbindung zwischen der Druckkammer 66 des Sensierungszylinders 60 und der Leitung 72 als Öffnung ausgebildet, welche bei einer leichten Betätigung des Bremsbetätigungselements 53 geschlossen wird. Demgegenüber kann eine hydraulische Verbindung zwischen der Druckkammer 66 des Sensierungszylinders 60 und einer Feder 76 so ausgebildet sein, dass sie auch bei einem signifikanten Betätigen des Bremsbetätigungselements 52 nicht geschlossen/abgedichtet wird. Die Feder 76 kann über eine weitere Reservoirleitung 78 mit dem Bremsmediumreservoir 40 verbunden sein. Über ein stetig verstellbares Ventil 80, welches über eine Leitung 82 mit der Feder 76 und über eine Leitung 84 mit der Druckkammer 66 verbunden ist, kann der Druck in der Druckkammer auf einen gewünschten Wert aktiv eingestellt werden. Das stetig verstellbare Ventil 80 ist somit auch als Simulatorventil bezeichenbar. Ein weiteres stetig steuerbares Ventil 86 ist über eine Leitung 88 mit einem in der Leitung 84 ausgebildeten Verzweigungspunkt 90 und über eine Leitung 92 mit einem in der Leitung 26 ausgebildeten Verzweigungspunkt 94 verbunden. Auch dieses stetig verstellbare Ventil 86 kann zum Einstellen eines gewünschten Drucks in der Druckkammer 66 des Sensierungszylinders 60 herangezogen werden. Des Weiteren umfasst das Bremssystem ein Deaktivierungsventil 96, welches über eine Leitung 98 mit einem in der Leitung 88 ausgebildeten Verzweigungspunkt 100 und über eine Leitung 102 mit einem in der Leitung 82 ausgebildeten Verzweigungspunkt 104 verbunden ist.

Die Anwendbarkeit der im Weiteren beschriebenen Steuervorrichtung 16 für die Speicherladepumpe 10 ist jedoch nicht auf die oben beschriebene Ausstattung des Bremssystems mit den Komponenten 18-104 beschränkt.

Die Steuervorrichtung 16 weist eine Ansteuereinrichtung 106 auf, welche dazu ausgelegt ist, mittels eines Steuersignals 107 die Speicherladepumpe 10 in zumindest einen Normalmodus mit einer Normaldrehzahl zu steuern. Eine Empfangseinrichtung 108 der Steuervorrichtung 16 ist dazu ausgelegt, eine von einer (nicht dargestellten) fahrzeugeigenen Komponente als Sensor- und/oder Informationssignal 109 bereitgestellte Größe bezüglich einer an die Speicherladepumpe 10 bereitgestellten Versorgungsspannung zu empfangen. Beispiele für die bereitstellbare Größe sind bei der oberen Beschreibung des Verfahrens bereits aufgezählt. Die die Größe bereitstellende Komponente kann auch ein als Untereinheit der Steuervorrichtung 16 ausgebildeter Sensor zum Bestimmen/Messen der Größe sein. Ebenso kann die Komponente ein an dem Fahrzeug extern von der Steuervorrichtung angeordneter Sensor oder eine zentrale Fahrzeug-Informationsausgabeeinrichtung sein.

Die Ansteuereinrichtung 106 ist zusätzlich dazu ausgelegt, zu ermitteln, ob die mittels eines Weiterleitungssignals 110 empfangene Größe in einem für den Normalmodus vorgegebenen/auf einem internen Speicher 112 abgespeicherten Normalwertebereich liegt. Sofern die empfangene Größe in dem vorgegebenen Normalwertebereich liegt, wird die Speicherladepumpe 10 bevorzugter Weise weiterhin mittels der Steuervorrichtung 16 in dem Normalmodus betrieben/gesteuert.

Liegt die empfangene Größe jedoch außerhalb des Normalwertebereichs, so ist die Ansteuereinrichtung 106 dazu ausgelegt, die Speicherladepumpe 10 aus dem Normalmodus in mindestens einen Abweichungsmodus mit mindestens einer von der Normaldrehzahl abweichenden Solldrehzahl zu steuern.

In einer vorteilhaften Ausführungsform ist die Ansteuereinrichtung 106 zusätzlich dazu ausgelegt ist, zu ermitteln, ob die empfangene Größe in einem vorgegebenen ersten Abweichungs-Wertebereich, in einem vorgegebenen zweiten Abweichungs-Wertebereich oder zwischen dem ersten Abweichungs-Wertebereich und dem zweiten Abweichungs-Wertebereich, welche sich nicht überschneiden, liegt. Die zwei vorgegebenen/auf dem internen Speicher 112 abgespeicherten Abweichungs-Wertebereiche liegen außerhalb des Normalwertebereichs. Sofern die empfangene Größe in dem an dem Normalwertebereich angrenzenden ersten Abweichungs-Wertebereich liegt, wird die Speicherladepumpe 10 mittels der Ansteuereinrichtung 106 in einen ersten Abweichungsmodus mit einer ersten Solldrehzahl größer als der Normaldrehzahl gesteuert/geschaltet. Liegt die empfangene Größe in dem von dem Normalwertebereich weiter beabstandeten zweiten Abweichungs-Wertebereich, so kann die Speicherladepumpe 10 mittels der Ansteuereinrichtung 106 in einen zweiten Abweichungsmodus mit einer zweiten Solldrehzahl gleich Null steuerbar sein. Sofern die empfangene Größe zwischen dem ersten Abweichungs-Wertebereich und dem zweiten Abweichungs-Wertebereich liegt, ist die Speicherladepumpe 10 mittels der Ansteuereinrichtung 106 in einen dritten Abweichungsmodus mit einer dritten Solldrehzahl größer als der Normaldrehzahl steuerbar, in welchem ein Anlauf der Speicherladepumpe 10 mittels der Ansteuereinrichtung 106 unterbindbar ist.

Mittels der Steuervorrichtung 16 sind somit die oben bereits ausgeführten Vorteile gewährleistbar. Somit kann insbesondere ein fahrzeugeigenes Bordnetz bei einem Spannungsabfall geschont werden. Dies ist bei der hier beschriebenen Ausbildung des Bremssystems besonders vorteilhaft, da die Speicherladepumpe 10 lediglich zum Beladen des Druckspeicher 14 verwendet wird, mittels welchem ein verbesserter Bedienkomfort und/oder ein angenehmeres Bremsgefühl (Pedalgefühl) für den Fahrer gewährleistet werden. Auf derartige Verbesserungen verzichtet ein Fahrer jedoch gerne, sofern dadurch eine ausreichende Energieversorgung von notwendigeren Fahrzeugkomponenten bei einem Spannungsabfall im Bordnetz gewährleistet wird.

## Patentansprüche

1. Steuervorrichtung (16) für eine Speicherladepumpe (10) eines Bremssystems eines Fahrzeugs mit:
einer Ansteuereinrichtung (106), welche dazu ausgelegt ist, die Speicherladepumpe (10) zumindest in einen Normalmodus mit einer Normaldrehzahl zu steuern;
wobei eine Empfangseinrichtung (108), welche dazu ausgelegt ist, eine von einer fahrzeugeigenen Komponente bereitgestellte Größe bezüglich einer an die Speicherladepumpe (10) bereitgestellten Versorgungsspannung (U) zu empfangen;
**dadurch gekennzeichnet, dass**
die Ansteuereinrichtung (106) zusätzlich dazu ausgelegt ist, zu ermitteln, ob die empfangene Größe außerhalb eines für den Normalmodus vorgegebenen Normalwertebereichs (N) liegt, und, gegebenenfalls, die Speicherladepumpe (10) aus dem Normalmodus in mindestens einen Abweichungsmodus mit mindestens einer von der Normaldrehzahl abweichenden Solldrehzahl zu steuern.

2. Steuervorrichtung (16) nach Anspruch 1, wobei die Ansteuereinrichtung (106) zusätzlich dazu ausgelegt ist, zu ermitteln, ob die empfangene Größe in einem vorgegebenen ersten Abweichungs-Wertebereich (A1) liegt, und, gegebenenfalls, die Speicherladepumpe (10) in einen ersten Abweichungsmodus mit einer ersten Solldrehzahl größer als der Normaldrehzahl zu steuern.

3. Steuervorrichtung (16) nach Anspruch 1 oder 2, wobei die Ansteuereinrichtung (106) zusätzlich dazu ausgelegt ist, zu ermitteln, ob die empfangene Größe in einem vorgegebenen zweiten Abweichungs-Wertebereich (A2) liegt, und, gegebenenfalls, die Speicherladepumpe (10) in einen zweiten Abweichungsmodus mit einer zweiten Solldrehzahl gleich Null zu steuern.

4. Steuervorrichtung (16) nach Anspruch 3, wobei die Ansteuereinrichtung (106) zusätzlich dazu ausgelegt ist, zu ermitteln, ob die empfangene Größe zwischen dem ersten Abweichungs-Wertebereich (A1) und dem zweiten Abweichungs-Wertebereich (A2) liegt, und, gegebenenfalls, die Speicherladepumpe (10) in einen dritten Abweichungsmodus mit einer dritten Solldrehzahl größer als der Normaldrehzahl zu steuern, in welchem ein Anlauf der Speicherladepumpe (10) mittels der Ansteuereinrichtung (106) unterbindbar ist.

5. Pumpe mit einer Steuervorrichtung (16) nach einem der vorhergehenden Ansprüche.

6. Bremssystem mit
einer Steuervorrichtung (16) nach einem der vorhergehenden Ansprüche;
einer Speicherladepumpe (10); und
einem Druckspeicher (14), in welchem mittels der Speicherladepumpe (10) ein Druck aufbaubar ist.

7. Bremssystem nach Anspruch 6, wobei der Druckspeicher (14) mit einem Hauptbremszylinder (18) des Bremssystems hydraulisch so verbunden ist, dass ein Innendruck in mindestens einer Druckkammer (20) des Hauptbremszylinders (18) mittels des in dem Druckspeicher (14) aufgebauten Drucks steigerbar ist.

8. Bremssystem nach Anspruch 7, wobei der Druckspeicher (14) mit einer Vorkammer (22) des Hauptbremszylinders (18) hydraulisch verbunden ist.

9. Verfahren zum Betreiben einer Speicherladepumpe (10) eines Bremssystems eines Fahrzeugs mit dem Schritt:
Betreiben der Speicherladepumpe (10) in einem Normalmodus mit einer Normaldrehzahl;
**gekennzeichnet durch** die Schritte:
Ermitteln einer Größe bezüglich einer an die Speicherladepumpe (10) bereitgestellten Versorgungsspannung (U);
Ermitteln, ob die ermittelten Größe außerhalb eines für den Normalmodus vorgegebenen Normalwertebereichs (N) liegt; und
sofern die ermittelte Größe außerhalb des Normalwertebereichs (N) liegt, Steuern der Speicherladepumpe (10) aus dem Normalmodus in mindestens einen Abweichungsmodus mit mindestens einer von der Normaldrehzahl abweichenden Solldrehzahl.

10. Verfahren nach Anspruch 9, wobei ermittelt wird, ob die ermittelte Größe in einem vorgegebenen ersten Abweichungs-Wertebereich (A1) liegt, und, sofern die empfangene Größe in dem ersten Abweichungs-Wertebereich (A1) liegt, die Speicherladepumpe (10) in einen ersten Abweichungsmodus mit einer ersten Solldrehzahl größer als der Normaldrehzahl gesteuert wird.

11. Verfahren nach Anspruch 9 oder 10, wobei ermittelt wird, ob die ermittelte Größe in einem vorgegebenen zweiten Abweichungs-Wertebereich (A2) liegt, und, sofern die empfangene Größe in dem zweiten Abweichungs-Wertebereich (A2) liegt, die Speicherladepumpe (10) in einen zweiten Abweichungsmodus mit einer zweiten Solldrehzahl gleich Null gesteuert wird.

12. Verfahren nach Anspruch 11, wobei ermittelt wird, ob die empfangene Größe zwischen dem ersten Abweichungs-Wertebereich (A1) und dem zweiten Abweichungs-Wertebereich (A2) liegt, und, sofern die empfangene Größe zwischen dem ersten Abweichungs-Wertebereich (A1) und dem zweiten Abweichungs-Wertebereich (A2) liegt, die Speicherladepumpe (10) in einen dritten Abweichungsmodus mit einer dritten Solldrehzahl größer als der Normaldrehzahl gesteuert wird, in welchem ein Anlauf der Speicherladepumpe (10) unterbunden wird.

## Claims

1. Control apparatus (16) for a reservoir charging pump (10) of a brake system of a vehicle, having:
an actuation device (106) which is designed to control the reservoir charging pump (10) at least in a normal mode with a normal rotation speed;
wherein a receiving device (108) which is designed to receive a variable, which is supplied by a vehicleinternal component, relating to a supply voltage (U) which is supplied to the reservoir charging pump (10);
**characterized in that**
the actuation device (106) is additionally designed to determine whether the received variable lies outside a normal value range (N) which is prespecified for the normal mode, and, if necessary, to switch the reservoir charging pump (10) from the normal mode to at least one deviation mode with at least one setpoint rotation speed which differs from the normal rotation speed.

2. Control apparatus (16) according to Claim 1, wherein the actuation device (106) is additionally designed to determine whether the received variable lies in a prespecified first deviation value range (A1), and, if necessary, to switch the reservoir charging pump (10) to a first deviation mode with a first setpoint rotation speed greater than the normal rotation speed.

3. Control apparatus (16) according to Claim 1 or 2, wherein the actuation device (106) is additionally designed to determine whether the received variable lies in a prespecified second deviation value range (A2), and, if necessary, to switch the reservoir charging pump (10) to a second deviation mode with a second setpoint rotation speed equal to zero.

4. Control apparatus (16) according to Claim 3, wherein the actuation device (106) is additionally designed to determine whether the received variable lies between the first deviation value range (A1) and the second deviation value range (A2), and, if necessary, to switch the reservoir charging pump (10) to a third deviation mode with a third setpoint rotation speed greater than the normal rotation speed, in which third deviation mode start-up of the reservoir charging pump (10) can be suppressed by means of the actuation device (106).

5. Pump having a control apparatus (16) according to one of the preceding claims.

6. Brake system having
a control apparatus (16) according to one of the preceding claims;
a reservoir charging pump (10); and
a pressure reservoir (14) in which a pressure can be built up by means of the reservoir charging pump (10).

7. Brake system according to Claim 6, wherein the pressure reservoir (14) is hydraulically connected to a master brake cylinder (18) of the brake system such that an internal pressure in at least one pressure chamber (20) of the master brake cylinder (18) can be increased by means of the pressure which is built up in the pressure reservoir (14).

8. Brake system according to Claim 7, wherein the pressure reservoir (14) is hydraulically connected to a pre-chamber (22) of the master brake cylinder (18).

9. Method for operating a reservoir charging pump (10) of a brake system of a vehicle, comprising the step of:
operating the reservoir charging pump (10) in a normal mode with a normal rotation speed;
**characterized by** the steps of:
determining a variable relating to a supply voltage (U) which is supplied to the reservoir charging pump (10);
determining whether the determined variable lies outside a normal value range (N) which is prespecified for the normal mode; and
if the determined variable lies outside the normal value range (N), switching the reservoir charging pump (10) from the normal mode to at least one deviation mode with at least one setpoint rotation speed which deviates from the normal rotation speed.

10. Method according to Claim 9, wherein it is determined whether the determined variable lies in a prespecified first deviation value range (A1), and, if the received variable lies in the first deviation value range (A1), the reservoir charging pump (10) is switched to a first deviation mode with a first setpoint rotation speed greater than the normal rotation speed.

11. Method according to Claim 9 or 10, wherein it is determined whether the determined variable lies in a prespecified second deviation value range (A2), and, if the received variable lies in the second deviation value range (A2), the reservoir charging pump (10) is switched to a second deviation mode with a second setpoint rotation speed equal to zero.

12. Method according to Claim 11, wherein it is determined whether the received variable lies between the first deviation value range (A1) and the second deviation value range (A2), and, if the received variable lies between the first deviation value range (A1) and the second deviation value range (A2), the reservoir charging pump (10) is switched to a third deviation mode with a third setpoint rotation speed greater than the normal rotation speed, in which third deviation mode start-up of the reservoir charging pump (10) is suppressed.

## Revendications

1. Dispositif de commande (16) pour une pompe de charge d'accumulateur (10) d'un système de freinage d'un véhicule, comprenant :
un système de commande (106) qui est conçu pour commander la pompe de charge d'accumulateur (10) au moins en un mode normal avec une vitesse de rotation normale,
un système de réception (108), qui est conçu pour recevoir une grandeur fournie par un composant propre au véhicule relative à une tension d'alimentation (U) fournie à la pompe de charge d'accumulateur (10) ;
**caractérisé en ce que**
le système de commande (106) est en outre conçu pour déterminer si la grandeur reçue se situe en dehors d'une plage de valeurs normales (N) prédéfinie pour le mode normal et, éventuellement, pour commander la pompe de charge d'accumulateur (10) hors du mode normal dans au moins un mode de dérivation avec au moins une vitesse de rotation de consigne s'écartant de la vitesse de rotation normale.

2. Dispositif de commande (16) selon la revendication 1, dans lequel le système de commande (106) est en outre conçu pour déterminer si la grandeur reçue se situe dans une première plage de valeurs de dérivation prédéfinie (A1) et, éventuellement, pour commander la pompe de charge d'accumulateur (10) dans un premier mode de dérivation avec une première vitesse de rotation de consigne supérieure à la vitesse de rotation normale.

3. Dispositif de commande (16) selon la revendication 1 ou 2, dans lequel le système de commande (106) est en outre conçu pour déterminer si la grandeur reçue se situe dans une deuxième plage de valeurs de dérivation prédéfinie (A2) et, éventuellement, pour commander la pompe de charge d'accumulateur (10) dans un deuxième mode de dérivation avec une deuxième vitesse de rotation de consigne égale à zéro.

4. Dispositif de commande (16) selon la revendication 3, dans lequel le système de commande (106) est en outre conçu pour déterminer si la valeur reçue se situe entre la première plage de valeurs de dérivation (A1) et la deuxième plage de valeurs de dérivation (A2), et éventuellement pour commander la pompe de charge d'accumulateur (10) dans un troisième mode de dérivation avec une troisième vitesse de rotation de consigne supérieure à la vitesse de rotation normale, dans lequel un démarrage de la pompe de charge d'accumulateur (10) peut être supprimé au moyen du système de commande (106).

5. Pompe comprenant un dispositif de commande (16) selon l'une quelconque des revendications précédentes.

6. Système de freinage comprenant
un dispositif de commande (16) selon l'une quelconque des revendications précédentes ;
une pompe de charge d'accumulateur (10) ; et
un accumulateur de pression (14) dans lequel une pression peut être produite au moyen de la pompe de charge d'accumulateur (10).

7. Système de freinage selon la revendication 6, dans lequel l'accumulateur de pression (14) est connecté hydrauliquement à un cylindre de frein principal (18) du système de freinage de telle sorte qu'une pression interne dans au moins une chambre de pression (20) du cylindre de frein principal (18) puisse augmenter au moyen de la pression produite dans l'accumulateur de pression (14).

8. Système de freinage selon la revendication 7, dans lequel l'accumulateur de pression (14) est connecté hydrauliquement à une préchambre (22) du cylindre de frein principal (18).

9. Procédé pour faire fonctionner une pompe de charge d'accumulateur (10) d'un système de freinage d'un véhicule, comprenant l'étape consistant à :
faire fonctionner la pompe de charge d'accumulateur (10) en un mode normal avec une vitesse de rotation normale ;
**caractérisé par** les étapes suivantes :
déterminer une grandeur relative à une tension d'alimentation (U) fournie à la pompe de charge d'accumulateur (10) ;
déterminer si la grandeur déterminée se situe en dehors d'une plage de valeurs normales (N) prédéfinie pour le mode normal ; et
si la grandeur déterminée se situe à l'extérieur de la plage de valeurs normales (N), commander la pompe de charge d'accumulateur (10) hors du mode normal dans au moins un mode de dérivation avec au moins une vitesse de rotation de consigne s'écartant de la vitesse de rotation normale.

10. Procédé selon la revendication 9, dans lequel on détermine si la grandeur déterminée se situe dans une première plage de valeurs de dérivation prédéfinie (A1), et, si la grandeur reçue se situe dans la première plage de valeurs de dérivation (A1), la pompe de charge d'accumulateur (10) est commandée dans un premier mode de dérivation avec une première vitesse de rotation de consigne supérieure à la vitesse de rotation normale.

11. Procédé selon la revendication 9 ou 10, dans lequel on détermine si la grandeur déterminée se situe dans une deuxième plage de valeurs de dérivation prédéfinie (A2) et, si la grandeur reçue se situe dans la deuxième plage de valeurs de dérivation (A2), la pompe de charge d'accumulateur (10) est commandée dans un deuxième mode de dérivation avec une deuxième vitesse de rotation de consigne égale à zéro.

12. Procédé selon la revendication 11, dans lequel on détermine si la grandeur reçue se situe entre la première plage de valeurs de dérivation (A1) et la deuxième plage de valeurs de dérivation (A2), et si la grandeur reçue se situe entre la première plage de valeurs de dérivation (A1) et la deuxième plage de valeurs de dérivation (A2), la pompe de charge d'accumulateur (10) est commandée dans un troisième mode de dérivation avec une troisième vitesse de rotation de consigne supérieure à la vitesse de rotation normale, dans lequel un démarrage de la pompe de charge d'accumulateur (10) est supprimé.
